# EUROPEAN PATENT APPLICATION

(11) **EP 4 292 411 A1**
(43) Date of publication of application: **20.12.2023**
(21) Application number: 23174566.2
(22) Date of filing: 22.05.2023
(51) Int. Cl.: A01B 69/00, G05D 1/02, G06V 20/58

(54) **AGRICULTURAL OPERATION MAPPING**

(30) Priority: 17.06.2022 GB 202208926
(71) Applicant: AGCO International GmbH, 8212 Neuhausen am Rheinfall (CH)
(72) Inventor: MUJKIC, Esma, 8930 Randers (DK)
(74) Representative: AGCO Intellectual Property Department

(57) **Abstract**

Systems and methods are provided for mapping one or more agricultural operations within a working environment. Image data is received (202) from one or more imaging sensors (29) mounted or otherwise associated with one or more agricultural machines (10, MOa, MOb) within the working environment and configured to obtain image data indicative of the working environment and/or one or more objects located therein. The data is analysed (204) utilising a detection model to classify one or more objects within the working environment to identify (206), from the one or more classified objects, one or more working machines within the working environment. Operational information for the working machine(s) is logged and/or updated (208) in an operational map of the working environment in dependence on the identification of the classified object(s).

## Description

### CROSS-REFERENCE TO RELATED APPLICATIONS

Not applicable.

### FIELD

Embodiments of the present disclosure relate generally to mapping an agricultural operation in a working environment.

### BACKGROUND

Many agricultural operational tasks involve the use of multiple agricultural machines operating within the same working environment. The multiple agricultural machines may be working cooperatively, for example, a grain cart or trailer may be driven alongside a harvesting machine whilst harvesting to enable simultaneous unloading of the harvested crop material from the harvesting machine to the cart / trailer. In other instances, the multiple machines may be operating separate from one another, e.g. in harvesting different sections of crop within the working environment.

To help coordinate such operations, it would be advantageous to provide a system for monitoring and tracking each machine and its operation within the field. Whilst ultimately this may be achieved through each of the machines being connected over data networks and the like, either directly and/or indirectly via a remote server, for example, this does not account for machines and implements without such functionality. For instance, whilst a GNSS capability may be commonplace for new machinery, operational tasks often involve the use of older machinery and/or towed implements which would not necessarily incorporate this. Furthermore, a fully connected system may be rather complex and would require a stable communication link between each of the machines and/or between the machines and a remote operational sever monitoring and optionally controlling the operation. As will be appreciated, in an agricultural context in varying operating conditions this may not always be possible, and hence such known systems may additionally only be useable in certain operating conditions.

It would be advantageous to provide a system which overcomes or at least partly addresses problems associated with known systems.

### BRIEF SUMMARY

In an aspect of the invention there is provided a system for mapping one or more agricultural operations within a working environment, comprising: one or more imaging sensors mounted or otherwise associated with one or more agricultural machines within the working environment and configured to obtain image data indicative of the working environment and/or one or more objects located therein; and one or more controllers, configured to: receive image data from the one or more imaging sensors; analyse the image data utilising a detection model to classify one or more objects within the working environment; identify, from the one or more classified objects, one or more working machines within the working environment; and log and/or update operational information associated with the one or more identified working machines within an operational map of the working environment in dependence on the identification of the classified object(s).

Advantageously, the present invention utilises image data obtained by imaging sensor(s) associated with agricultural machine(s) operating within the working environment. Such sensors may be provided on the machines for other purposes, including monitoring of a specific operational task being performed by the machine, providing additional information to an operator of the machine, e.g. views of blind spots, etc. and/or other guidance tasks. The present invention may utilise these sensors for identifying other agricultural machines operating in the environment. As discussed herein, this may include additional machines or implements which do not comprise a positioning and/or communication system and as such cannot report its position or operation for updating the operational map. The present invention may additionally utilise imaging sensor(s) on a first, connected machine to validate data from a second, connected machine and/or to introduce a redundancy into the system in case of a malfunction of a positioning system of the second vehicle or for instances where the second vehicle may lose its data connection with a remote system.

The one or more controllers may collectively comprise an input (e.g. an electronic input) for receiving one or more input signals. The one or more input signals may comprise image data from the one or more imaging sensors. This may be received directly from the imaging sensor(s) and/or from a communication module associated with the respective agricultural machine associated with the imaging sensor(s), for example. The one or more controllers may collectively comprise one or more processors (e.g. electronic processors) operable to execute computer readable instructions for controlling operational of the system, for example, to determine classify the object(s), identify the object(s), and/or update the operational information. The one or more processors may be operable to generate one or more control signals for logging and/or updating the operational information. The one or more controllers may collectively comprise an output (e.g. an electronic output) for outputting the one or more control signals. The output may comprise a communication interface with, for example, a data server storing the operational map.

In embodiments, the system may be configured such that image data may be received from imaging sensors associated with a plurality of agricultural machines operating within the environment. This can include one or more imaging sensors on or otherwise associated with each of the machines, for example.

The one or more controllers may be configured to determine operational information for the one or more identified working machines, or an update to be applied thereto, in dependence on the received image data. The operational information may include positional information for the one or more identified working machines. This may include an absolute position of the one or more identified working machines. The operational information may include positional information indicative of a relative position of the one or more identified working machines with respect to the imaging sensor(s) and/or with respect to the agricultural machine associated with the imaging sensor(s) from which the operational information is determined.

The positional information may include a direction of travel of the one or more identified working machines. The one or more controllers may be configured to determine the direction of travel of the one or more identified working machines from the image data, for example through determination of an orientation of the identified working machine(s) (e.g. with respect to the agricultural machine associated with the respective imaging sensor(s)), or through analysis of image data obtained over a time period indicative of movement of the one or more identified working machines with respect to the agricultural machine associated with the respective imaging sensor(s).

The operational information may comprise an indication of an operational task being performed by the working machine. This may inferred from the classification from the detection model. For example, the operational information may comprise information relating to whether the working machine is performing a harvesting operation, a tillage operation, a seeding operation or a fertilizing operation. The operational information may comprise an indication of whether the working machine is or is not performing an operational task. The operational information may comprise information relating to performance of the operational task, such as a working height, a working depth, etc.

The one or more imaging sensors may include a camera. The one or more imaging sensors may comprise a transceiver sensor, such as a LIDAR sensor, RADAR sensor, ultrasonic sensor, or time of flight camera (ToF) for example. Where used, a transceiver sensor may be used to obtain information relating to the distance between the object and the sensor, and as such can be used in conjunction with the image data from another sensor, e.g. a camera, for classification by the detection model, for example, for analysing the expected size of a given object within the camera data using the depth information from the transceiver sensor. Data from a transceiver sensor may additionally be used by the one or more controllers for determining positional information for the one or more working machines.

The detection model may comprise a machine-learned model. The machine-learned model may be trained on one or more training datasets with known objects with respective classifications. The machine-learned model may comprise a deep learning model utilising an object detection algorithm. The deep learning model may include a YOLO detection algorithm, such as a YOLOv5 detection model, for example. The training dataset(s) for the model may comprise an agricultural dataset, comprising training images including agricultural-specific objects.

Classification by the detection model may comprise assignment of a class to the object. The class may be one of a plurality of classes for the respective model, as determined during the learning process through assignment of suitable labels to known objects. The plurality of classes may be grouped by category, and optionally by subcategory. For example, the plurality of classes may include 'tractor', 'combine', 'car', 'truck', 'trailer', 'baler', 'combine header', 'square bale', 'round bale', 'person', and 'animal', for example. The classes may be grouped into categories, which may include, for example, 'Vehicle', 'Implement', 'Static Object', and 'Dynamic Object'. The 'Vehicle' category may be further divided into sub-categories, including 'Agricultural' - for example including classes 'tractor' and 'combine' - and 'Road' - including classes 'car', and 'truck', for example. The 'Implement' category may be further divided into sub-categories, including "Tractor' - for example including classes 'trailer' and 'baler' - and 'Combine' - including the 'combine header' class, for example. The 'Static Object' category may include a sub-category 'Bale', for example including classes 'round bale' and 'square bale'. The 'Dynamic Object' category may include a sub-category 'Person', for example including the 'person' class. Classifying identified objects in this way may allow the one or more controllers to distinguish objects of interest - i.e. working machines within the environment - from other objects - e.g. obstacles, humans, etc.

The classification output by the detection model may comprise a bounding box overlaid onto the image data at the location of the object as determined by the model. The position of the bounding box within the image data may be utilised by the one or more controllers of the system for determining positional information for the respective working machine. For example, the position of the bounding box within the image data may be used as an indication of the relative position of the identified working machine with respect to the agricultural machine associated with the respective imaging sensor(s).

The one or more controllers may be configured to receive positional data from the one or more agricultural machines. The positional data may be received from a positioning system associated with the agricultural machine(s), such as a GNSS module of the agricultural machine(s). The one or more controllers may be configured to determine positional information for the one or more identified working machines in dependence on positional data received from the positioning system of the agricultural machine(s). For example, utilising the positional data for an agricultural machine and image data from sensor(s) associated with that machine, the one or more controllers may be configured to determine positional information for the working machine(s) in dependence thereon. Where used, the GNSS module may utilise any known and available positioning system, including GPS, GLONASS, Galileo, etc. In some embodiments, the positioning system of one or more of the agricultural machines may comprise a real-time kinetic (RTK) GPS system utilising a local base station for providing positional correction for the associated agricultural machine.

The operational map may be stored on a data server. This may be local to an agricultural machine operating in the working environment. In preferred embodiments, the operational map is stored on a remote sever accessible through a suitable wireless communication link at the one or more agricultural machine, or in some instances remotely, e.g. via an operator for the working environment overseeing individual operational tasks performed therein. Storing the operational map remotely may allow for multiple agricultural machines to communicate therewith.

The system may include a user interface. The one or more controllers may be configured to generate a representation of the operational map for display by, and optionally provide interaction via, the user interface. The user interface may be suitably connected to the storage location of the operational may, which may advantageously be a wireless connection such that the operational map (or at least a representation thereof) can be viewed by an operator at any connected location. The user interface may comprise a display screen of a remote user device, for example. The user interface may comprise a display terminal of an agricultural machine operating within the environment.

In a further aspect of the invention there is provided a control system for mapping one or more agricultural operations within a working environment, the control system comprising one or more controllers, and being configured to: receive image data from one or more imaging sensors mounted or otherwise associated with one or more agricultural machines within the working environment and configured to obtain image data indicative of the working environment and/or one or more objects located therein; analyse the image data utilising a detection model to classify one or more objects within the working environment; identify, from the one or more classified objects, one or more working machines within the working environment; and control the logging and/or updating of operational information associated with the one or more identified working machines within an operational map of the working environment in dependence on the identification of the classified object(s).

The one or more controllers of the control system of the present aspect of the invention may be configured in the same manner as the one or more controllers of the mapping system of the preceding aspect of the invention.

A further aspect of the invention provides a method of mapping one or more agricultural operations within a working environment, comprising: receiving image data from one or more imaging sensors mounted or otherwise associated with one or more agricultural machines within the working environment and configured to obtain image data indicative of the working environment and/or one or more objects located therein; analysing the image data utilising a detection model to classify one or more objects within the working environment; identifying, from the one or more classified objects, one or more working machines within the working environment; and controlling the logging and/or updating of operational information associated with the one or more identified working machines within an operational map of the working environment in dependence on the identification of the classified object(s).

The method of the present aspect of the invention may comprise performance of any one or more of the functional features of the system or control system of a preceding aspect discussed herein.

A further aspect of the invention comprises computer software which, when executed by one or more processors, causes performance of the method of the preceding aspect of the invention.

An aspect of the invention provides a computer readable storage medium comprising the computer software of the preceding aspect of the invention.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified perspective view illustrating an agricultural machine embodying aspects of the present disclosure;
FIG. 2 is a schematic diagram illustrating an embodiment of a system of the present disclosure;
FIG. 3 is a flowchart illustrating an embodiment of a method of the present disclosure;
FIG. 4 is a schematic representation of a working environment demonstrating the operational use of embodiments of the present disclosure.

### DETAILED DESCRIPTION

Systems and methods are provided for mapping one or more agricultural operations within a working environment, F. Image data is received from one or more imaging sensors, e.g. a camera 29 mounted or otherwise associated with one or more agricultural machines, including harvester 10 operating within the working environment F and configured to obtain image data indicative of the working environment F and/or one or more objects M1, M2, O1 located therein. In illustrated embodiments, this may include other working machines M1, M2, or fixed objects such as electricity poles O1, and the like. The present disclosure employs a detection model, e.g. a machine-learned detection model employing an object detection algorithm trained on a training dataset for classifying objects present within the environment, F. The assigned classification(s) is then used to identify working machines, M1, M2 operating within the working environment, F, and subsequently to control the logging and/or updating of operational information associated with the one or more working machines, which may include a position, direction of travel or the like for the machine(s), within an operational map of the working environment. As discussed herein, the operational map may be stored and be accessible from a data server, e.g. remote data server 130 or a memory device associated with a machine operating in the environment.

### Harvester

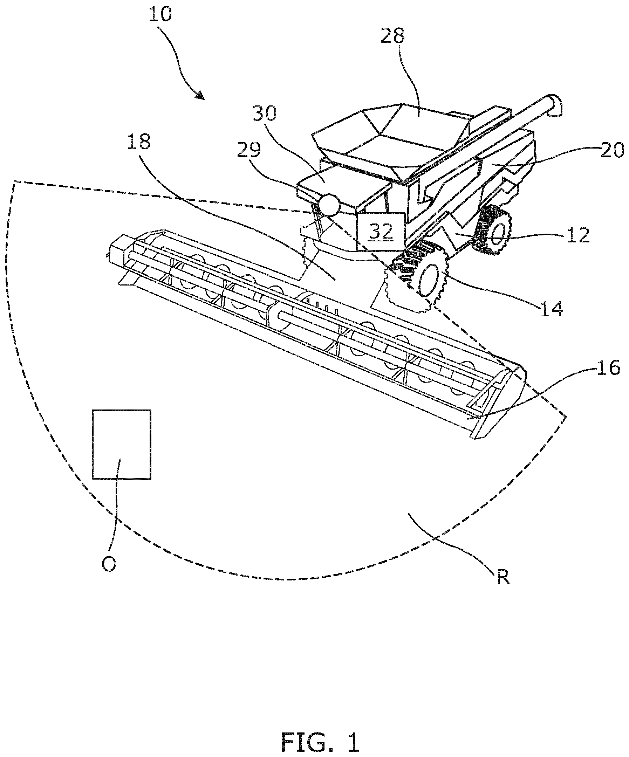

FIG. 1 illustrates an agricultural machine in the form of a harvester 10, which includes a chassis 12 supported and propelled along the ground by ground-engaging wheels 14. Although the harvester 10 is illustrated as being supported and propelled on ground-engaging wheels 14, the harvester 10 can also be supported and propelled by full tracks or half tracks, as will be appreciated. A harvesting header 16 carried by the chassis 12 is used to gather crop and to conduct the crop material to a feederhouse 18 and then to a beater in the harvester 10. The beater guides the crop upward to a threshing and separating system 20, which is configured to separate grain from material other than grain (MOG), and deliver the grain to a grain tank 28 carried by the harvester 10. The operation of the harvester 10 is controlled from an operator cab 30. A user interface 32 is provided within the operator cab 30 for displaying or otherwise providing information to an operator of the harvester 10 data indicative of the operation of the harvester 10 or other associated components, e.g. the header 16, or for providing a graphical representation of the operational map, as discussed herein.

The harvester 10 is provided with an imaging sensor in the form of camera 29 mounted thereto and configured to obtain image data representative of the working environment of the harvester 10, and analysed in the manner discussed herein. In an extension of the present disclosure, the harvester 10 (or more generally the agricultural machine) may additionally or alternatively be provided with a different type of imaging sensor. For example, a transceiver-type sensor, such as a LIDAR sensor may be provided for imaging the environment of the machine. Advantageously, transceiver-type sensors may provide depth information for the environment, including a measure of a distance between the machine and the object. This can be utilised by the present disclosure, and in particular by the detection model for classifying one or more objects within the environment of the machine, for determining a position and/or direction of travel of the one or more object, e.g. if relating to other agricultural machines in the environment.

Whilst discussed herein with reference to harvester 10, it will be apparent to the skilled reader that the systems and methods discussed herein may be applicable to and include the use of any agricultural machine, including forage harvesters, self-propelled balers, tractors and tractor/implement combinations, including others. The present disclosure extends to utilising multiple agricultural machines having respective imaging sensor(s) associated therewith for obtaining image data indicative of the working environment.

### System

The present disclosure provides a system 100 which is configured to log and/or update operational information associated with one or more identified working machines M1, M2 within an operational map.

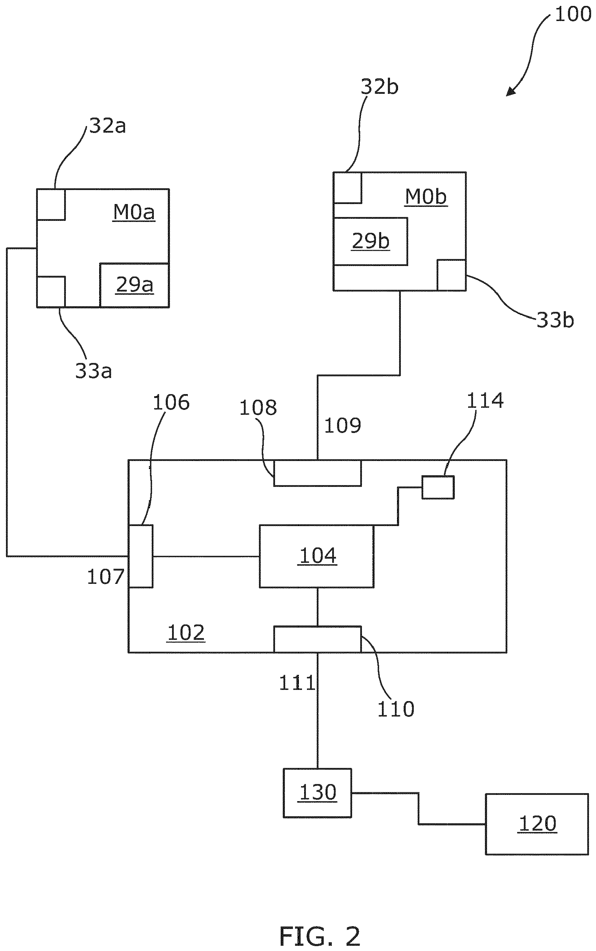

FIG. 2 illustrates a system 100 which utilises imaging sensors in the form of a camera 29a associated with (e.g. mounted, coupled or otherwise associated with) a first agricultural machine M0a and a camera 29b associated with a second agricultural machine M0b. Each of the machines M0a, M0b are operably coupled to a controller 102 for performing functional aspects of the present disclosure discussed herein.

Controller 102 comprises an electronic processor 104, electronic inputs 106, 108 and an electronic output 110. The processor 104 is operable to access a memory 114 of the controller 102 and execute instructions stored therein to perform the steps and functionality of the present disclosure discussed herein, e.g. by controlling the logging and/or updating of the operational map in dependence on a determined identity for one or more agricultural machine operating in the environment of the machines M0a, M0b, as determined by the control system 100.

The processor 104 is operable to receive via input 106 which, in the illustrated embodiment, takes the form of input signals 107 received from a control unit associated with camera 29a associated with the first agricultural machine M0a, image data representative of the working environment of the machine M0a. In this embodiment, the processor is additionally configured to receive via input 108, which, in the illustrated embodiment, takes the form of input signals 109 received from a control unit associated with camera 29b associated with the second agricultural machine M0b, image data representative of the working environment of the machine M0b.

In addition, each machine M0a, M0b separately includes a respective positioning module 33a, 33b for obtaining positional information indicative of a position of the respective machine M0a, M0b within the working environment. As discussed herein, the positional information may be used in conjunction with the image data for determining operational information relating to other agricultural machines operating in the environment, including the relative position of such machines for logging and/or updating such information for the operational map of the environment. Processor 104 is operable to receive via inputs 106, 108 the positional data from respective positioning modules 33a, 33b associated with the first and second agricultural machines M0a, M0b.

It will be appreciated that the disclosure extends to the use of more than two agricultural machines for obtaining the image and/or positional data, and similarly to the use of only one machine, e.g. machine M0a. The disclosure is not limited in this sense.

The processor 104 is configured to analyse the image data received from one or more of the camera(s) 29a, 29b and determine therefrom a classification for one or more objects in the environment in the manner discussed herein, i.e. using a trained object detection models for identifying the objects. The processor 104 is further configured to utilise the determined classification(s) to identify one or more working machines within the environment of the respective agricultural machines M0a, M0b.

Operational information for the one or more working machines may be determined from this identification. For example, once identified, a position of the respective working machine(s) can be determined, e.g. utilising positional information for the relevant machine M0a, M0b as determined from respective positioning module 33a, 33b and a determined relative position of the identified working machine with respect thereto. The position may be logged on the operational map. As discussed herein, this may additionally extend to determining a direction of travel for the working machine(s), amongst other data points.

Controller 102 includes an electronic output 110 configured to output control signals 111 generated by the processor 104 for controlling the logging and/or updating of operational information for the machine(s) in the operational map based on the classification and identification of the one or more working machines. Here, electronic output 110 is operably connected to a remote database in the form of server unit 130 which stores the operational map for the environment.

In an extension of the system 100, controller 102 may be configured for controlling respective user interfaces 32a, 32b of agricultural machines M0a, M0b for displaying information indicative of the operational map (e.g. a graphical representation of the operational map) and/or to receive an operator input for initiating control actions based on the operational map, through generation and output of one or more control signals. In such embodiments, the inputs 106, 108 may be configured as input/output devices for the output of control signals to local control unit(s) of the machines M0a, M0b for receiving information and/or controlling operation of operable components of the machines M0a, M0b, e.g. the respective user interfaces 32a, 32b.

The system 100 additionally includes a remote operator unit 120, which may comprise a remote user device or the like, which enables a remote operator to access the server 130 for obtaining the operational map and/or interact therewith. This may advantageously provide a remote user with an ability to remotely monitor a working operation (or plurality of operations) within the working environment.

The illustrated embodiment shows an embodiment wherein a single control unit - controller 102 - is provided for all agricultural machines M0a, M0b operating in the environment. This may be located remote from the environment, for example on a remote server network or the like. Alternatively, the system 100 may include local processing units associated with each of the agricultural machines m0a, m0b, which may be operably connected to the remote server 130, and configured to log and/or update the operational map stored at the remote server 130 directly.

### Method

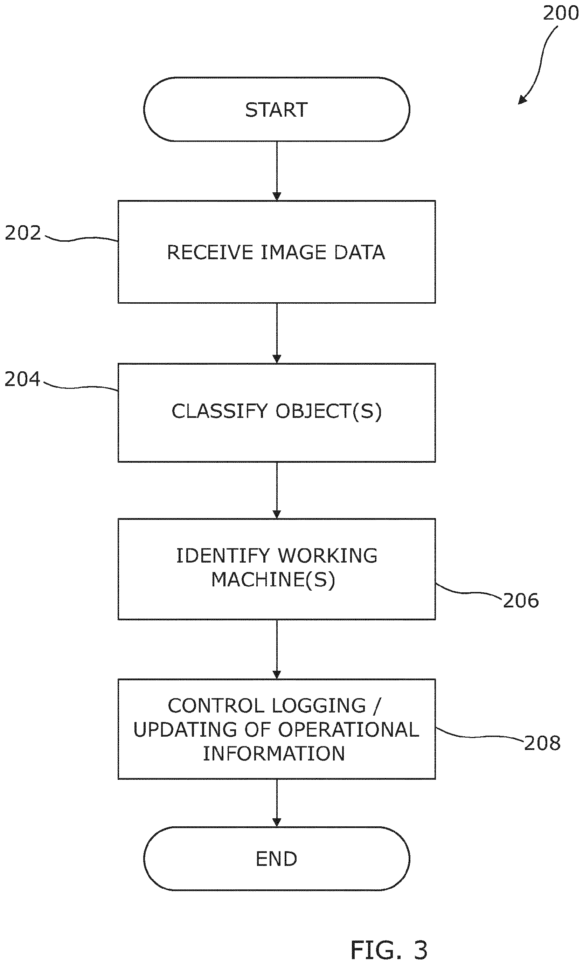

FIG. 3 illustrates a method 200 in accordance with the present disclosure, and specifically utilising the system 100 shown in FIG 2. Method 200 comprises, at step 202, receiving image data from one or more image sensors (e.g. cameras 29a, 29b) mounted to respective agricultural machines M0a, M0b (and operable, in use, to capture image data representative of the working environment of the respective machines M0a, M0b). The cameras 29a, 29b are respectively mounted on the operator cab of the machines M0a, M0b and are directed such that the fields of the cameras 29a, 29b encompass a region ahead of the machine M0a, M0b, in use. It will be appreciated that the invention is not limited in this sense, and the cameras 29a, 29b or indeed any imaging sensor employed may be mounted with a field of view about any direction of the agricultural machine(s).

At step 204, the image data received is analysed, at controller 102 and specifically the processor 104 thereof as discussed herein, utilising the object detection model to classify one or more objects within the environment of the respective machine M0a, M0b. The object detection model comprises a trained object detection algorithm, trained using one or more training datasets having a plurality of images and known objects in those images. The training dataset used for training of the detection model may include multiple images annotated for multiple agriculture-specific classes. The annotated classes can include, for example: individual agriculture machines and/or implements, including 'tractor', 'combine', 'trailer', 'combine header', 'baler', or other in-field objects, including 'square bale', 'round bale', 'hedgerow', etc.

In an embodiment, the object detection model is based on YOLOv5 trained on this dataset. As would be understood, a YOLOv5 model is a single-stage object detector and consist of a backbone network, neck and detection head. The cross stage partial connections (CSP) backbone network is used to extract features from the input image. The layers in the neck of the network are inserted to collect feature maps from different stages. This enables the model to perform better when detecting objects of various sizes and scales. In YOLOv5, PANet is used as the neck network to obtain feature pyramids. The YOLO head applies anchor boxes on features and generates final output vectors with class probabilities, objectness scores and bounding boxes. The present disclosure utilises these output vectors to determine an identity for a given object, and specifically to identify one or more working machines in the working environment.

Specifically, at step 206, one or more working machines within the environment are identified. Specifically, the classification(s) output by the object detection model are analysed to determine which of one or more objects identified within the environment of the harvester 10 may represent a working machine. As an extension of this, the method 200 may extend to determining operational information for an identified working machine, including, for example, positional information representing the position of the working machine within the environment, and/or a direction of travel of the working machine.

At step 208, operational information relating to the identified working machine(s) is logged and/or updated on an operational map for the environment at the remote data server 130, thereby serving as a tracking system for tracking the position and optionally operational details of other agricultural machines within the working environment.

Further, the disclosure extends to the control over the user interfaces 32a, 32b in the manner discussed herein. For example, controlling the user interface 32a, 32b to display or otherwise present to the operator of the respective machine M0a, M0b a representation of the operational map, which may include image data obtained by respective cameras 29a, 29b, and/or a graphical representation of the operational map.

### Example

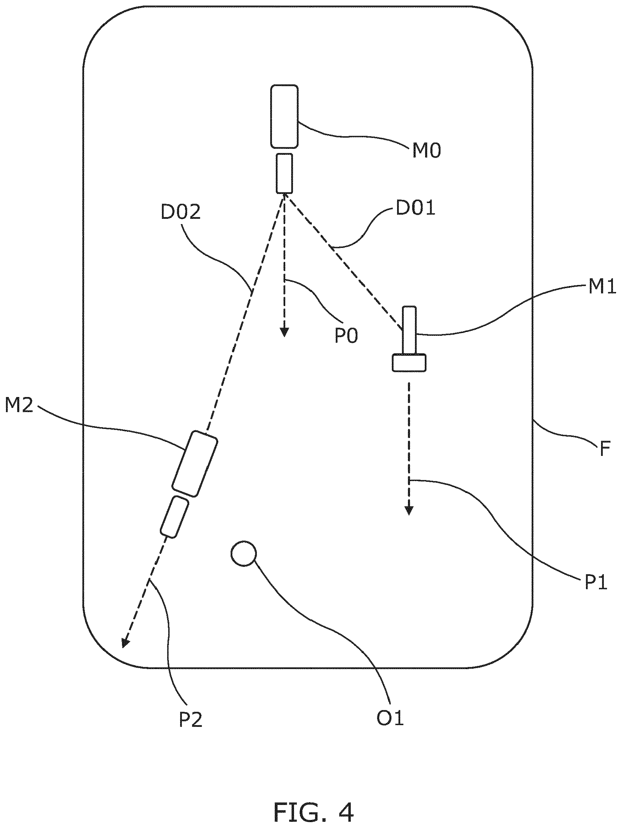

FIG. 4 shows an example working environment F illustrating the operational use of embodiments of the present disclosure discussed herein. Here, the present invention provides control over the logging and/or updating of operational information stored in an operational map of the working environment, F, utilising image data obtained by machines, e.g. tractor/trailer combination M0 operating within the environment.

In the illustrated embodiment, one or more imaging sensors are provided mounted on the tractor M0 and having an imaging region forward of the tractor M0 for imaging the working environment. As discussed herein, the one or more imaging sensors can include one or a combination of a camera, a transceiver sensor such as a LIDAR unit, amongst others. The one or more imaging sensors associated with tractor M0 are used to obtain image data of the working environment. Utilising the object detection model, classifications for various objects identified in the working environment can be determined. In this example, this includes a further tractor / trailer combination M2 following a working path P2, an obstacle in the form of an electricity pole O1 fixed in position within the field F and a harvesting machine M1 following a working path P1.

The classified objects are then analysed to identify one or more agricultural machines operating within the environment, i.e. harvester M1 and tractor/trailer combination M2, and operational information relating to those machines M1, M2 may be determined for logging and/or updating at the operational map.

For example, tractor M0 employs a LIDAR unit operable to provide depth information for the environment, and in particular distance information corresponding to the distance between the tractor M0 and the other working machines M1, M2. Here, this includes a distance D01 between the tractor M0 and the harvester M1, and a distance D02 between the tractor M0 and the tractor/trailer combination M2. This distance provides a relative position of the additional machines M1, M2 with respect to tractor M0. Using position information, e.g. from a position module of the tractor M0, an absolute position of the machines M1, M2 within the environment F can be determined.

In an extension of this, the system 100 may be configured to determine operational information including a direction of travel of the working machine(s) M1, M2 based on the image data from the imaging sensor(s) of the tractor M0 and the position information from the positioning module. This may include inferring a direction of travel from the orientation of the working machine(s) M1, M2, assuming the machines are moving in a forwards direction, or analysing movement of the machine(s) M1, M2 between consecutive data points obtained from the imaging sensor(s) and/or the position information.

In yet a further extension, the system 100 may be configured to determine operational information which includes an indication of the operational task performed by the working machine(s) M1, M2, based on the image data from imaging sensor(s) of the tractor M0. This may include identifying the working machine(s) M1, M2 in the manner discussed herein, and identifying, from the image data, whether those machines are performing a given operational task. This can be inferred from the classification based on the image data, e.g. depending on an operational position of an implement or components of the identified working machine(s), a travel path, etc.

In this manner, operational information for machine(s) M1, M2 is logged and/or updated in an operational map for the environment. Aspects of the present disclosure therefore advantageously provide means for tracking operation of multiple working machines within an environment F utilising sensor(s) located on one or more machines working within the environment. This is particularly advantageous where one or more machines operating in the environment do not have an ability to connect with a remote database for reporting operational information directly. This can extend to utilising the imaging sensor(s) on a first, connected machine (e.g. the tractor M0) to validate data from a second, connected machine (which could include machines M1, M2) and/or to introduce a redundancy into the system in case of a malfunction of a positioning system of the second vehicle or for instances where the second vehicle may lose its data connection with a remote system.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A system for mapping one or more agricultural operations within a working environment, comprising:
one or more imaging sensors mounted or otherwise associated with one or more agricultural machines within the working environment and configured to obtain image data indicative of the working environment and/or one or more objects located therein; and
one or more controllers, configured to:
receive image data from the one or more imaging sensors;
analyse the image data utilising a detection model to classify one or more objects within the working environment;
identify, from the one or more classified objects, one or more working machines within the working environment; and
log and/or update operational information associated with the one or more identified working machines within an operational map of the working environment in dependence on the identification of the classified object(s);
wherein the operational information comprises an indication of an operational task being performed by the working machine.

2. A system of claim 1, wherein the one or more controllers are configured to receive image data from one or more imaging sensors on or otherwise associated with each of a plurality of agricultural machines operating within the environment.

3. A system of claim 1 or claim 2, wherein the one or more controllers are configured to determine operational information for the one or more identified working machines, or an update to be applied thereto, in dependence on the received image data.

4. A system of any preceding claim, wherein the operational information includes positional information for the one or more identified working machines.

5. A system of claim 4, wherein the positional information includes one or more of:
an absolute position of the one or more identified working machines;
a relative position of the one or more identified working machines with respect to the imaging sensor(s) and/or with respect to the agricultural machine associated with the imaging sensor(s) from which the operational information is determined; and
a direction of travel of the one or more identified working machines.

6. A system of any preceding claim, wherein the operational information comprises an indication of whether the working machine is or is not performing an operational task.

7. A system of any preceding claim, wherein the one or more imaging sensors include: a camera; and/or a transceiver sensor.

8. A system of any preceding claim, wherein the detection model comprises a machine-learned model trained on one or more training datasets with known objects with respective classifications.

9. A system of any preceding claim, wherein the classification output by the detection model comprises a bounding box overlaid onto the image data at the location of the object as determined by the model; and wherein the position of the bounding box within the image data is utilised by the one or more controllers of the system for determining positional information for the respective working machine.

10. A system of any preceding claim, wherein the one or more controllers are configured to receive positional data from a positioning system associated with the agricultural machine(s).

11. A system of claim 10, wherein the one or more controllers are configured to utilise the positional data for an agricultural machine and image data from sensor(s) associated with that machine to determine positional information for the working machine(s) in dependence thereon.

12. A system of any preceding claim, wherein the operational map is stored on a remote data server accessible through a suitable wireless communication link at the one or more agricultural machines, or remotely by an operator for the working environment overseeing individual operational tasks performed therein.

13. A system of any preceding claim, comprising a user interface; and wherein the one or more controllers are configured to generate a representation of the operational map for display by, and optionally provide interaction via, the user interface.

14. A control system for mapping one or more agricultural operations within a working environment, the control system comprising one or more controllers, and being configured to:
receive image data from one or more imaging sensors mounted or otherwise associated with one or more agricultural machines within the working environment and configured to obtain image data indicative of the working environment and/or one or more objects located therein;
analyse the image data utilising a detection model to classify one or more objects within the working environment;
identify, from the one or more classified objects, one or more working machines within the working environment; and
control the logging and/or updating of operational information associated with the one or more identified working machines within an operational map of the working environment in dependence on the identification of the classified object(s);
wherein the operational information comprises an indication of an operational task being performed by the working machine.

15. A method of mapping one or more agricultural operations within a working environment, comprising:
receiving image data from one or more imaging sensors mounted or otherwise associated with one or more agricultural machines within the working environment and configured to obtain image data indicative of the working environment and/or one or more objects located therein;
analysing the image data utilising a detection model to classify one or more objects within the working environment;
identifying, from the one or more classified objects, one or more working machines within the working environment; and
controlling the logging and/or updating of operational information associated with the one or more identified working machines within an operational map of the working environment in dependence on the identification of the classified object(s);
wherein the operational information comprises an indication of an operational task being performed by the working machine.
